# EUROPÄISCHE PATENTANMELDUNG

(11) **EP 0 602 535 A2**
(43) Veröffentlichungstag der Anmeldung: **22.06.1994**
(21) Anmeldenummer: 93119824.6
(22) Anmeldetag: 09.12.1993
(51) Int. Cl.: G10K 11/26, G10K 11/16

(54) **Lärmmindernde Kapselung**

(30) Priorität: 18.12.1992 CH 3872/92
(71) Anmelder: MATEC HOLDING AG, CH-8700 Küsnacht (CH)
(72) Erfinder: Ghéczy, Ivan, CH-9475 Sevelen (CH)
(74) Vertreter: Ritscher, Thomas, Dr.

(57) **Zusammenfassung**

Eine Kapselung (3, 13) wie sie in der Automobilindustrie zur Minderung von Motorenlärm und Geräuschen von anderen Fahrzeugteilen verwendet wird. Diese Kapselung besteht aus einer geschäumten Aluminiumlegierung und ist selbsttragend. Durch die Verwendung von Aluminiumschaum für die Herstellung solcher Kapselungen, können diese einstückig und mit lokal unterschiedlichen physikalischen Eigenschaften ausgestaltet werden. Insbesondere sind die akustisch wirksamen Kapselungen in grossen Teilbereichen offenporig und in Teilbereichen, die der Befestigung dienen, weniger geschäumt.

## Beschreibung

Die vorliegende Erfindung betrifft eine Kapselung gemäss Oberbegriff des Anspruchs 1.

Formteile, die zur passiven Schallisolation verwendet werden, gibt es heute in verschiedenen Ausführungsformen. Eine erste Gruppe solcher Formteile umfasst alle Arten von Schallschirmen, die aus einem Fasermaterial oder offenzelligem Kunststoffschaum bestehen und in einem speziellen Halterahmen, z.B. unter der Motorhaube eines Kraftfahrzeuges, gehalten werden.Die zweite Gruppe umfasst Verkapselungen von Lärmquellen und schallisolierende Verkleidungen von Innenräumen, die ebenfalls überwiegend aus Fasermaterial oder offenzelligem Kunststoffschaum bestehen. Sie werden als Beschichtung auf eine tragende Fläche aufgetragen oder als plattenförmige Schicht an einer tragenden Fläche befestigt.

Schallschirme sind in der Mehrzahl ebene oder nur schwach gekrümmte Gebilde, deren Oberflächen nicht zusätzlich bearbeitet sind. Verkapselungen können einfacherweise aus Schallschirmen zusammengesetzt werden. Sofern es sich um Verkleidungen handelt, ist auf ihren sichtbaren Aussenseiten fast immer eine Dekorschicht aufgebracht.

Akustisch wirksame Bauelemente und insbesondere Schallschirme obengenannter Art sind beispielsweise in der EP-B-262 092 beschrieben. Diese Bauelemente weisen zwei Schichten auf, wovon die erste schallabsorbierende und wärmeisolierende Eigenschaften zeigt und die zweite als schalldämmende formstabile Trägerschicht ausgebildet ist. Diese Bauelemente weisen wohl eine selbsttragende Stabilität auf, sind jedoch in ihrer Herstellung äusserst aufwendig.

Alle andern bisher bekannten Formteile für die Schallisolation bei Kraftfahrzeugen weisen eine ungenügende Eigenstabilität auf und müssen auf tragende Fahrzeugteile aufgebracht, d.h. festgeklebt werden. Dies führt dazu, dass die Demontage dieser festgeklebten Formteile nicht in einfacher Weise möglich ist und eine umweltgerechte Entsorgung aus wirtschaftlichen Gründen nicht in Frage kommt.

Es ist deshalb die Aufgabe der vorliegenden Erfindung, ein akustisch wirksames, selbsttragendes Schalldämmelement zu schaffen, welches die Nachteile der obenerwähnten Formteile nicht aufweist.

Insbesondere soll ein rezyklierbares Schalldämmelement geschaffen werden, welches sich auch zur Verkapselung von Kraftfahrzeugmotoren geeignet und keine mehrschichtige Struktur aufzuweisen braucht. Dieses Element soll also sowohl gute wärmeisolierende und schallabsorbierende Eigenschaften, als auch eine besonders hohe Eigenstabilität aufweisen.

Diese Aufgabe wird erfindungsgemäss mit einem Formteil gemäss Anspruch 1 gelöst und zeichnet sich insbesondere dadurch aus, dass es aus geschäumtem Aluminium besteht.

Zur Herstellung des erfindungsgemässen Formteils wird ein dafür besonders entwickeltes Verfahren eingesetzt, welches die industrielle Fertigung dieser Formteile erlaubt. Bei diesem Verfahren wird pulverförmiges Aluminium mit einem geeigneten Treibmittel gemischt und entweder zu gewalzten Presslingen geformt oder direkt in die Formpresse eingestreut, dort geschäumt und geformt. Zur Erhöhung der Festigkeit und Härte des Aluminiumschaums, können dem Aluminium Zusatze in Form von Mangan- und/oder Magnesiumpulver beigegeben werden. Dieses Verfahren eignet sich insbesondere für die Verwendung von aufbereitetem, d.h. rezykliertem Aluminium und ermöglicht damit auch eine kostengünstige Herstellung der erfindungsgemässen Formteile.

Das erfindungsgemässe Formteil weist in einer bevorzugten Ausführungsform eine offenporige Struktur auf und ist als Kapsel für die Kapselung eines Motorblocks ausgebildet. In einer Weiterbildung der Erfindung werden vor dem Aufschäumen unterschiedliche Mengen des pulverförmigen Gemischs in die Formpresse gegeben. Dadurch können Formteile hergestellt werden, deren Härte und Dichte sowie Porengrösse und Porenart sich lokal unterscheiden.

Ebenso können beispielsweise unter Verwendung von flach gewalzten Rohlingen, beliebig geformte Bauteile mit integrierten Hohlräumen erzeugt werden. Solche Hohlräume können beispielsweise als Wärmetransport und/oder als Führungskanäle dienen.

Es erweist sich, dass die Herstellung von Bauteilen aus Aluminiumschaum eine ungeahnte Vielfalt an gestalterischen und konstruktiven Möglichkeiten zulässt. Insbesondere brauchen diese Bauteile nicht aus Reinaluminium hergestellt zu werden, zeigen eine hohe Langzeitstabilität und erweisen sich als kostengünstige Alternative zu bestehenden Lärmschutzelementen. Letztlich können diese Bauteile problemlos, d.h. ohne aufwendiges Auftrennen wieder demontiert und entsorgt werden.

Nachfolgend wird anhand von Ausführungsbeispielen die erfindungsgemässe Lärmisolation näher beschrieben. Es zeigt:
- Figur 1:: eine schematische Querschnittdarstellung einer Frontsicht einer erfindungsgemässen Motorkapselung;
- Figur 2:: eine schematische Darstellung einer Seitenansicht einer erfindungsgemässen Ventilatorkapselung.

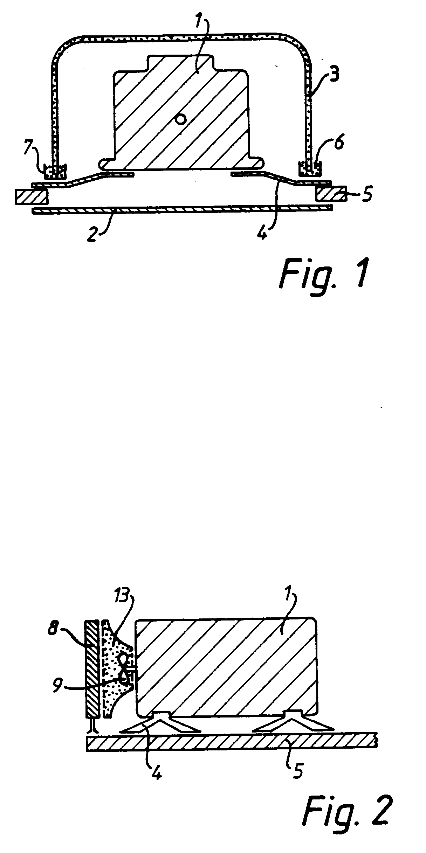

Aus der schematischen Querschnittdarstellung der Figur 1 ist ein Motorblock 1 ersichtlich, über welchem eine erfindungsgemässe Kapsel 3 gestülpt ist. Ueblicherweise ist der Motorblock 1 an Motorträgern 4 aufgehängt. Diese Motorträger 4 sind an den Chassisträgern 5 befestigt. In der vorliegenden Ausführungsform ist die Kapsel 3 schwingungsdämpfend gelagert, insbesondere um die Motorvibrationen nicht aufzunehmen und damit selber zu einer Schallquelle zu werden. Diese dämpfende Lagerung 6 besteht in einer ersten Ausführungsform aus einem in ein Lagergehäuse 7 eingefülltes Büschel von Aluminiumfasern, -gewirk und/oder -wolle. Es versteht sich, dass die Auflager der erfindungsgemässen Kapsel 3 so ausgebildet sein müssen, dass sie keine Schallbrücken bilden.

Erfindungsgemäss besteht die Kapsel 3 aus geschäumtem Aluminium und wird ein dafür besonders entwickeltes Verfahren eingesetzt. Insbesondere wird bei dem im vorliegenden Fall verwendeten Verfahren verdüstes Aluminium mit zirka 2% Kaliumbicarbonat gemischt und direkt in der geheizten Formpresse aufgeschäumt und geformt. Es versteht sich, dass das verwendete Aluminium zur Erhöhung der Festigkeit mit Mangan, Magnesium oder einer Mischung davon versetzt sein kann. Insbesondere lässt sich rezykliertes Aluminium ebenso gut verwenden wie Reinaluminium. Die Vorteile eines derart hergestellten Formteils sind im wesentlichen darin zu sehen, dass verdüstes Elektrolysemetall äusserst kostengünstig, dass das verwendete Kalziumbicarbonat erst bei zirka 570°C aktiv wird, während der Schmelzpunkt von Aluminium bei zirka 600°C liegt und auf diese Weise beliebige Formen aus einem naturharten Werkstoff mit z.B. einer Festigkeit von 190N, geschaffen werden können.

In einer Weiterbildung der erfindungsgemässen Kapselung weist dieses Formteil lokal verschieden stark geschäumte, resp. verdichtete Zonen auf und zeigt an gewünschten Stellen unterschiedliche Dicken und Festigkeiten. Insbesondere kann das erfindungsgemässe Formteil mehrere Lagen oder Bereiche unterschiedlicher Dichte und/oder Festigkeit aufweisen. In einer Weiterbildung ist auf dieses Formteil ein Schutzbelag aufgebracht, welcher den offenporigen Aluminiumschaum vor Verunreinigungen aller Art, insbesondere vor Feuchtigkeit schützt. Geeignete Folien sind dem Fachmann hinlänglich bekannt. Als für die vorliegende Kapselung besonders geeignet ist eine lose aufgespannte Aluminiumfolie zu betrachten. Es versteht sich auch, dass das offenporige Aluminiumschaumteil direkt bei der Fertigung mit einer Aluminiumhaut versehen wird.

Zur weiteren Reduktion des Motorengeräusches ist erfindungsgemäss auch ein Unterschild 2 vorgesehen. Dieses kann ebenfalls an den Chassisträgern 5 befestigt werden und braucht nicht offenporig zu sein.

In Figur 2 wird die Kapselung einer anderen Fahrzeuggeräuschquelle schematisch gezeigt. Dabei ist der Motorblock 1 wiederum über Motorträger 4 auf den Chassisträgern 5 abgestützt. Zwischen einem Kühlerelement 8 und dem Motorblock 1 ist ein erfindungsgemässes Kühleransatzstück 13 angeordnet, welches einen Ventilator 9 umschliesst. Dieses Kühleransatzstück weist kühlerseitig einen rechteckigen Grundriss auf, während es motorblockseitig zu einem kreisförmigen Querschnitt zusammenläuft. Derart ungleichförmige Bauteile konnten bis heute nur mit grossem technischen Aufwand geformt werden.

Es versteht sich, dass die oben beschriebenen Ausführungsformen der erfindungsgemässen, lärmmindernden Verkapselungen auf vielerleiweise modifiziert und an spezielle Anforderungen beim Motorenbau angepasst werden können.

So können beispielsweise Kanäle in die Kapselungen eingeformt werden, welche der aktiven Kühlung dienen, d.h. als Leitungen für Kühlmedien jeder Art verwendet werden können. Den Anforderungen entsprechend können die erfindungsgemässen Bauteile eine glatte, aufgerauhte oder gemusterte, eine geschlossenporige oder offenporige Oberfläche aufweisen. Ebenso können die erfindungsgemässen Kapselungen mit anderen Bauteilen verbunden, insbesondere verschmolzen werden. Die Verwendung von aufgeschäumten Aluminiumgemischen zur Herstellung der erfindungsgemässen Kapselungen erlaubt dem Fachmann auch die Dicke, Form, Porengrösse und -art, Härte, Dichte, Eigenstabilität, akustische Wirksamkeit, Wärmeleitfähigkeit, etc. in geeigneter Weise zu wählen.

## Patentansprüche

1. Kapselung für Lärmquellen, insbesondere in Motorfahrzeugen, dadurch gekennzeichnet, dass diese Kapselung aus einer geschäumten Aluminiumlegierung besteht.

2. Kapselung nach Anspruch 1, dadurch gekennzeichnet, dass die Zusammensetzung der Aluminiumlegierung lagenweise und/oder bereichsweise unterschiedlich ist.

3. Kapselung nach Anspruch 1, dadurch gekennzeichnet, dass die Aluminiumlegierung lokal unterschiedliche physikalische Eigenschaften, insbesondere unterschiedliche Dichte, Härte, Porengrösse oder Porenart aufweist.

4. Kapselung nach einem der Ansprüche 1 - 3, dadurch gekennzeichnet, dass die geschäumte Aluminiumlegierung offenporig ist.

5. Kapselung nach einem der Ansprüche 1 - 4, dadurch gekennzeichnet, dass diese Kapselung integrierte Hohlräume bzw. Kanäle, beispielsweise für den Wärmeabtransport, aufweist.

6. Kapselung nach einem der Ansprüche 1 - 5, dadurch gekennzeichnet, dass diese eine einstückige Kapsel umfasst, welche derart geformt ist, dass diese über den Motorblock eines Kraftfahrzeugs stülpbar ist.

7. Kapselung nach Anspruch 6, dadurch gekennzeichnet, dass weitere Bauteile, insbesondere Stützen, bzw. Montageelemente, in der geschäumten Aluminiumlegierung eingebettet resp. angeformt sind.

8. Kapselung nach Anspruch 7 dadurch gekennzeichnet, dass die einstückige Kapsel auf schwingungsdämpfenden Lagern befestigt ist.

9. Kapselung nach einem der Ansprüche 1 - 5, dadurch gekennzeichnet, dass diese ein Motorraumunterschild umfasst.

10. Kapselung nach einem der Ansprüche 1 - 5, dadurch gekennzeichnet, dass diese eine Kapsel umfasst, welche als trichterförmiges Kühleransatzstück geformt ist, welches über den Ventilator stülpbar ist.
